Europäisches Patentamt

European Patent Office

Office européen des brevets

(11) Publication number: **0 164 986 B1**

# EUROPEAN PATENT SPECIFICATION

(45) Date of publication of patent specification: **24.04.91**  (51) Int. Cl.⁵: **B23B 5/16**

(21) Application number: **85303908.9**

(22) Date of filing: **03.06.85**

(54) **Pipe scraper.**

(30) Priority: **07.06.84 GB 8414545**

(43) Date of publication of application:
**18.12.85 Bulletin 85/51**

(45) Publication of the grant of the patent:
**24.04.91 Bulletin 91/17**

(84) Designated Contracting States:
**BE DE FR IT NL**

(56) References cited:
**DE-C- 573 371**      **DE-C- 715 780**
**FR-A- 1 276 286**    **US-A- 2 753 739**
**US-A- 2 917 976**    **US-A- 3 168 002**
**US-A- 3 286 348**    **US-A- 3 553 904**
**US-A- 3 579 826**

(73) Proprietor: **British Gas Corporation**
**Rivermill House 152 Grosvenor Road**
**London SW1V 3JL(GB)**

(72) Inventor: **Dickinson, Alan John**
**23 Westerkirk Southfield Lea**
**Cramlington Northumberland(GB)**

## Description

This invention relates to a scraping device for scraping cylindrical objects such as plastic pipes of the type used for gas and water mains, according the precharacterizing portion of claim 1, see DE-C-715780.

It is necessary to be able to scrape the surface of plastic pipes adjacent the ends of the pipes so as to prepare the surface for application of jointing material or to provide a good seal in a joint.

It is desirable that the scraping action should be longitudinal which avoids the possibility of air entrapment at the interface.

An object of the invention is to provide a scraping device which may be used on a cylindrical object to scrape the surface and which combines the advantages of a device which can be rotated around the surface of the object with the advantages of essentially longitudinal scraping.

The scraper according to this invention is particularly useful in dealing with plastic pipes such as polyethylene pipes.

In the accompanying drawing :-

Figure 1 is an isometric view of a scraper device embodying the present invention as applied to an end of a plastics gas pipe;

Figure 2 is a plan view of the scraping device itself when detached from the clamping device illustrated in figure 1;

Figure 3 is an isometric view of an alternative construction of the scraper.

The scraper has a framework 10 which comprises the base 11 and two end portions 12,13. Journaled between the end portions 12 and 13 is a helical bladed rotary cutter 14. the cutter 14 is on a shaft 15 which also carries a pinion 16 and may be rotated by means of a lever 17 acting through a ratchet device 18. The pinion 16 drives the larger pinion 19 mounted on a shaft 20 which carries a roller 21 having a US-A-2917976 shows a machine for cutting a bevelled end on a pipe. An end mill is shown at an angle to the axis of the pipe. The mill only contacts the work at a single point and its function is to cut material to form a bevel. Furthermore, the material being cut is metal.

DE-C-715780 shows a machine also for cutting a bevelled end on a pipe. A bevelled cutter is shown. It rotates about an axis parallel to the axis of the pipe but its cutting blades are inclined and interrupt the circumferential surface of the pipe. The cutting blades make only a point contact with the pipe and their action is to cut material to form a bevel. The material being cut is metal. The machine shows that it is known to use drive rollers engaging the circumferential surfaces of the pipe. Also, a common handle drives the drive rollers and the bevel cutter through gearing, a step-down ratio being used for the drive rollers.

We have found that, in the case of a plastic pipe, a very efficient scraping action an be achieved using a cutter similar in many respects to the end mill shown in US-A-2917976. However, we position such a cutter so that it lies parallel to the axis of the pipe and engages a circumferential surface of the pipe at a multiplicity of points spaced along a line parallel to said axis. On rotation, the cutter performs a multiplicity of longitudinal scrapes parallel to said axis.

According to the invention, a means for removing material from a pipe or similar object comprises a support structure supporting the following items: a scraping member, drive means, step-down gearing and operating means, said operating means being operatively connected to said scraping member to rotate the same and also being connected by said gearing to drive means to rotate the same in rolling drive engagement with a circumferential surface of said object, thus relatively to rotate said structure and said object said means being characterised in that said object is a plastics pipe and said scraping member is a helically bladed rotary member which extends parallel to the axis of relative rotation of said structure and said pipe and which engages a circumferential surface of s aid pipe simultaneously at a multiplicity of points spaced along a line parallel to said axis whereupon, on rotation, said rotary member is applied to the surface in such a manner that a low angle helix scrape approximating to a longitudinal scrape takes place at each of said multiplicity of points.

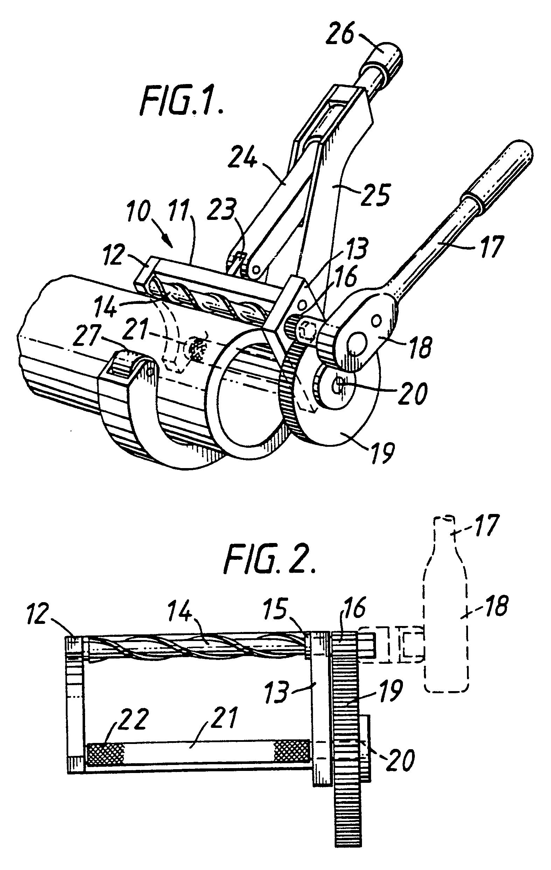

Pivoted to a lug 23 on the framework 10 is a restraining shaft 24 which is supported in a Reed clamp 25 of conventional design. When the scraper device is applied to a pipe the device is mounted on the shaft as shown in figure 1 and the Reed clamp tightened up by means of knurled nut 26 so as to bring the helical bladed rotary cutter 14 and the roller 21 into contact with the surface of the pipe. The Reed clamp has a number of rollers such as 27 so that it supports the framework 10 for rotation around the pipe.

When the lever 17 is rotated it will rotate the helical bladed cutter 14 and also rotate the fraction surfaced roller 21 at a much lower rate so that as the cutter rotates the whole assembly will move slowly around the outer peripheral surface of the pipe.

The design of the helical cutter is such that it will scrape a low angle helix which approximates to a longitudinal scrape parallel to the longitudinal axis of the pipe. At the same time the whole assembly will move round the periphery of the pipe so as to complete the scraping of the end portion of the pipe.

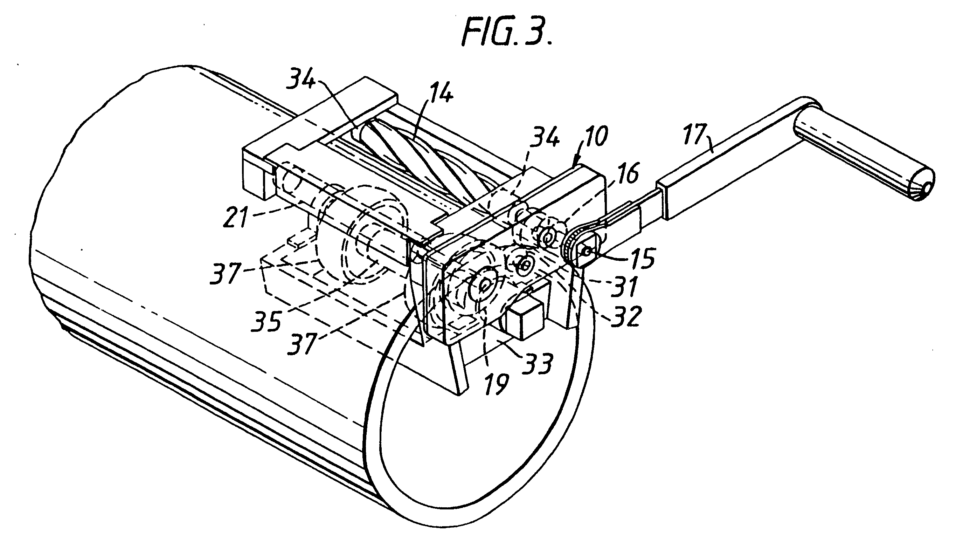

Figure 3 illustrates an alternative embodiment wherein an internal load bar 35 is utilized to replace the Reed clamp 15 (Fig. 1). The load bar is a journaled shaft mounted within a double cantilever frame 33 and aligned parallel to the longitudinal axis of the pipe. Shaft 35 carries a pair of pinch wheels 37 which bear upon the internal surface of the pipe and rotate round the inner surface of the pipe following the movement of the framework round the outer surface of the pipe.

In this embodiment the cutter and guide bar are driven through a gear train, housed in gear box 30, rather than through the pair of pinions 16,19 as illustrated in Figure 1. It is preferred to provide a gear reduction ratio of between 3 to 4:1 from the cutter to the drive bar. Furthermore, it is preferred that the cutter and drive bars counter-rotate with respect to each other, so that they have a tendency to move away from each other. Thus by providing suitable intermediate pinions mounted on shafts 31,32, movement of the lever 17 to induce clockwise rotation of the shaft 15 will cause counter clockwise rotation of shaft 21.

In order to improve contact between the cutter and drive bars with the pipe surface, the ends of each bar may be independently suspended by providing resilient pads between the frame 10 and the respective bearing blocks at the end of each shaft 15,21.

The depth of cut may be controlled by the provision of gauge rings 34 (Fig. 3) at each end of the cutter bar 14.

## Claims

1. A means for removing material from a pipe or similar object comprising a support structure (10) supporting the following items: a scraping member (14), drive means (21), step-down gearing (16, 19;30) and operating means (17), said operating means (17) being operatively connected to said scraping member (14) to rotate the same and also being connected by said gearing (16, 19;30) to said drive means (21) to rotate the same in rolling drive engagement with a circumferential surface of said object, thus relatively to rotate said structure and said object characterised in that said object is a plastics pipe and said scraping member is a helically bladed rotary member (14) which extends parallel to the axis of relative rotation of said structure (1) and said pipe and which engages a circumferential surface of said pipe simultaneously at a multiplicity of points spaced along a line parallel to said axis whereupon, on rotation, said rotary member (14) is applied to the surface in such a manner that a low angle helix scrape approximating to a longitudinal scrape takes place at each of said multiplicity of points.

2. A means according to claim 1, a restraining shaft (24) and a C-shaped clamp (25) being part of the support structure (10) and the C-shaped clamp (25) having roller means (27) to support the structure (10).

3. A means according to claim 1, the structure (10) comprising wheel means (37) positioned at the opposite circumferential surface of the object from the helically bladed rotary cutter (14) and rolling round said circumferential surface upon rotation of the structure (10).

4. A means according to any preceding claim, the drive means (21) and the helically bladed rotary cutter (14) being arranged to roll on the same circumferential surface and being driven in opposite senses by the step down gearing (16, 19; 30).

## Revendications

1. Moyen pour enlever de la matière d'un tube ou objet similaire, comportant une structure (10) de support supportant les pièces suivantes : un élément (14) de raclage, des moyens d'entraînement (21), un engrenage réducteur (16, 19 ; 30) et des moyens d'actionnement (17), lesdits moyens d'actionnement (17) étant reliés de manière active audit élément de raclage (14) pour le faire tourner et étant aussi reliés par ledit engrenage (16, 19 ; 30) auxdits moyens d'entraînement (21) pour les faire tourner en contact d'entraînement par roulement avec une surface circonférentielle dudit objet provoquant ainsi une rotation relative de ladite structure et dudit objet, caractérisé en ce que ledit objet est un tube de matière plastique et ledit élément de raclage est un élément rotatif (14) à lames hélicoïdales qui s'étend parallèlement à l'axe de rotation relative de ladite structure (1) et dudit tube et qui est en contact avec une surface circonférentielle dudit tube simultanément en un grand nombre de points espacés sur une ligne parallèle audit axe, à la suite de quoi, sous l'effet d'une rotation, ledit élément rotatif (14) est appliqué sur la surface d'une manière telle qu'un raclage en hélice sous un faible angle, correspondant approximativement à un raclage longitudinal, a lieu en chacun dudit grand nombre de points.

2. Moyen selon la revendication 1, dans lequel une barre (24) de retenue et une bride (25) de forme en C font partie de la structure (10) de support, la bride (25) de forme en C comportant un moyen à galet (27) pour supporter la structure (10).

3. Moyen selon la revendication 1, dans lequel la structure (10) comporte des moyens à roues (37) placés à la surface circonférentielle opposée de l'objet par rapport au couteau rotatif (14) à lames hélicoïdales et roulant autour de ladite surface circonférentielle sous l'effet d'une rotation de la structure (10).

4. Moyen selon l'une quelconque des revendications précédentes, dans lequel les moyens d'entraînement (21) et le couteau rotatif (14) à lames hélicoïdales sont agencés de façon à rouler sur la même surface circonférentielle et sont entraînés dans des sens opposés par l'engrenage réducteur (16, 19 ; 30).

**Ansprüche**

1. Vorrichtung zur spanabhebenden Bearbeitung eines Rohres oder ähnlichen Objektes, mit einem Trägeraufbau (10), der folgende Einzeleinrichtungen trägt: einen Schaber (14), Antriebsmittel (21), ein Reduziergetriebe (16, 19; 30) und Betätigungsmittel (17), wobei die Betätigungsmittel (17) mit dem Schaber (14) in Wirkverbindung stehen, um denselben zu drehen, und außerdem über das Getriebe (16, 19; 30) mit den Antriebsmitteln (21) verbunden sind, um diese in Rolltriebsverbindung mit einer Umfangsfläche des Objektes zu drehen, um auf diese Weise den Aufbau und das Objekt relativ zueinander zu drehen, dadurch gekennzeichnet, daß das Objekt ein Kunststoffrohr und der Schaber ein mit schraubenförmig angeordneten Schneiden versehener Drehbauteil (14) ist, der sich parallel zur Achse der Relativdrehung des Aufbaus (10) und des Rohres erstreckt und der an einer Umfangsfläche des Rohres gleichzeitig an einer Vielzahl von Stellen angreift, die im Abstand voneinander auf einer parallel zur genannten Achse verlaufenden Linie angeordnet sind, woraufhin bei Drehung der Drehbauteil (14) an der Fläche so angesetzt wird, daß eine Schabung mit kleinem Schraubenwinkel, annähernd eine Längsschabung, an jeder der vielen Stellen stattfindet.

2. Vorrichtung nach Anspruch 1, dadurch gekennzeichnet, daß eine Gegenwelle (24) und eine C-förmige Klemme (25) Teil des Trägeraufbaus (10) sind und daß die C-förmige Klemme (25) Rollen (27) aufweist, um den Aufbau (10) abzustützen.

3. Vorrichtung nach Anspruch 1, dadurch gekennzeichnet, daß der Aufbau (10) Räder (37) aufweist, die auf der Umfangsfläche des Objektes auf der dem Drehbauteil (14) entgegengesetzten Seite angeordnet sind und sich auf der Umfangsfläche bei Drehung des Aufbaus (10) abwälzen.

4. Vorrichtung nach einem der vorangehenden Ansprüche, dadurch gekennzeichnet, daß die Antriebsmittel (21) und der mit schraubenförmigen Schneiden versehene Drehbauteil (14) so angeordnet sind, daß sie sich auf der gleichen Umfangsfläche abwälzen und im entgegengesetzten Drehsinn durch das Reduziergetriebe (16, 19; 30) angetrieben werden.

*FIG.1.*

26

24

25

10  11  23

12

13

16

17

14

27  21

18

20

19

*FIG.2.*

17

12  14  15  16

18

13  19

22  21

20

FIG. 3.